# EUROPEAN PATENT APPLICATION

(11) **EP 3 112 011 A1**
(43) Date of publication of application: **04.01.2017**
(21) Application number: 16175007.0
(22) Date of filing: 17.06.2016
(51) Int. Cl.: B01D 53/50, B01D 53/86, B08B 15/02, F23J 11/00

(54) **TREATMENT PLANT OF SHIP EMISSIONS IN PORTS**

(30) Priority: 02.07.2015 IT UB20151849
(71) Applicant: GREEN ENGINEERS S.r.L., 22074 Lomazzo (CO) (IT)
(72) Inventor: FESTA, Enrico, 22074 Lomazzo (Como) (IT)
(74) Representative: Lunati & Mazzoni S.r.L.

(57) **Abstract**

Treatment plant of ship emissions in port (1) suitable to be associated with a vessel (10) comprising at least one smokestack (11) defining a discharge opening (11a) for exhaust gases from said smokestack (11); the treatment plant of ship emissions in port 1 comprises at least one collection hood (2) of the exhaust gases suitable to engage to the smokestack (11) at the discharge opening (11a) so as to collect the exhaust gases coming out of said smokestack (11); a scrubber (3) of the exhaust gases collected by the collection hood (2) suitable to abate the pollutants present in the exhaust gases; and a movement unit (4) suitable to move the collection hood (2) arranging it at the discharge opening (11a), wherein the scrubber (3) comprises at least one filtering chamber (310) comprising at least one bag filter (311) suitable to purify the exhaust gases of the smokestack (11) in dry operation and comprising a tubular structure (311a) made of ceramic material.

## Description

The present invention relates to a treatment plant of ship emissions in ports of the type specified in the preamble of the first claim.

Similar devices are described in the patent documents US-A-2005/244318, US-A-2010/180559 and US-A-2006/213197.

As is known, at present, a vessel entering port can dock using its own engines. Alternatively, the docking of a vessel is carried out by a special tug which secures the vessel entering the harbour and tows said vessel into dock.

The prior art mentioned above has several significant drawbacks.

A first significant drawback is represented by the fact that the vessel's engines produce large amounts of exhaust fumes which significantly degrade the quality of the air not only inside the port but also in surrounding areas.

It is to be noted how such drawback is particularly evident since, to ensure both the functioning of the vessel's instruments and of the various utilities in use by the people on board, when in port the vessel reduces the speed of its main navigation engines to standby but turns on the auxiliary generator (s) and keeps the onboard boiler (if present) on, to ensure the onboard services, including safety and security services, ensure functioning of the discharge means and loading/unloading equipment and other vital functions of the vessel, for as long as it remains docked in port.

Witness to this problem is the fact that in the port of Naples alone from 17 October 2014 to 31 December 2014, vessels deposited in the air a total quantity of pollutants estimated at 840 tons.

To try to solve this problem, some ports in Northern Europe and the USA are providing power stations from the mooring quay which, when a vessel is moored, are connected to the vessel and thus electrically power the utilities and instruments on board in place of the engines, which, in this case can be reduced to the stand-by mode while the vessels are in port.

This solution, although representing an improvement, has other drawbacks.

A first drawback is to be identified in the fact that a port, to power all the vessels, must install an extremely powerful power station in a place next to the port, adapt the distribution network to allow the passage of large amounts of energy in addition to those already transiting on the same network, a series of electrical infrastructures such as substations, cable ducts, frequency variation cabinets (many vessels are powered at 60 Hz, while others are powered at 50 Hz), at each docking station of the same port and, therefore, invest large sums of money, with very long construction times and serious inconvenience to all the port authorities as a result of the simultaneous presence of multiple worksites, invasive for excavations, civil and masonry works, renovations and construction.

Another major drawback is the fact that the vessels, especially those that are not new (approximately 90% of the vessels in use), have no installation engagement connectors and, therefore, cannot be externally powered.

To adapt the vessels to this solution, the ship owner is obliged to conduct expensive modernisation works on the vessel.

In this situation the technical purpose of the present invention is to devise a treatment plant of ship emissions in ports able to overcome the drawbacks referred to.

Within the sphere of said technical purpose one important purpose of the invention is to have a port plant which permits a reduction of the environmental impact of vessels in ports without requiring large investments.

In particular, an important purpose of the invention is to obtain a port plant which prevents the free dispersion of the exhaust gases of vessels as currently happens. A further purpose of the invention is to make a port plant for the treatment of ship emissions in port which can be easily adapted to any kind of vessel, without the need for modifications on board.

The technical purpose and specified aims are achieved by a port plant for the treatment of ship emissions in port as claimed in the appended Claim 1.

Preferred embodiments are described in the dependent claims.

The characteristics and advantages of the invention are clearly evident from the following detailed description of a preferred embodiment thereof, with reference to the accompanying drawings, in which:

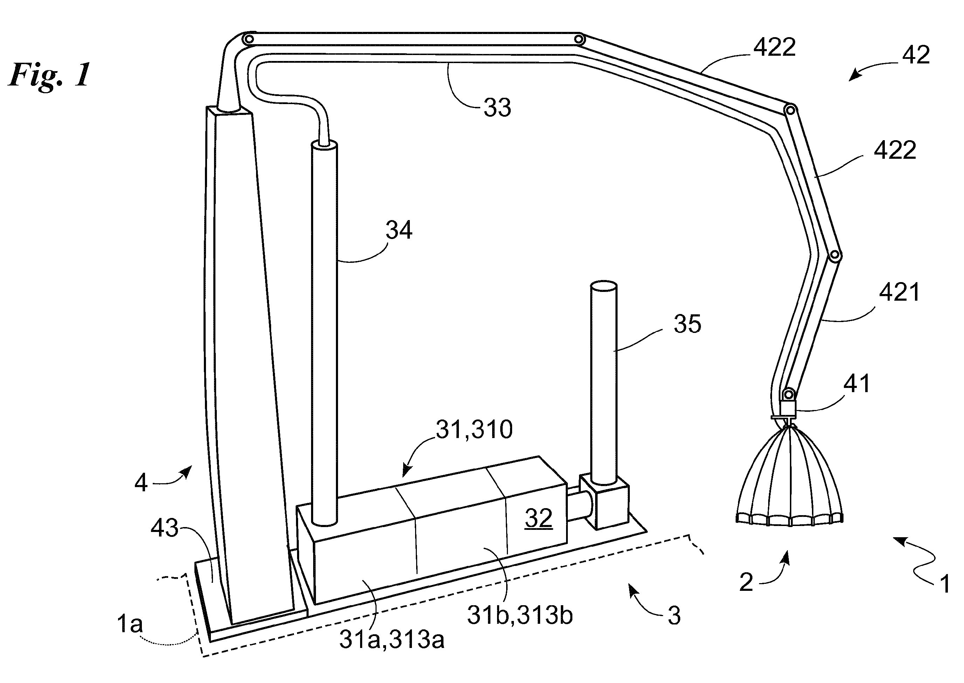

**Fig. 1** shows a treatment plant of ship emissions in port according to the invention;
**Fig. 2** illustrates a condition of use of a treatment plant of ship emissions in port;
**Fig. 3** shows the assembly in Fig. 2 in a second position of use;
**Fig. 4** shows a component of the treatment plant of ship emissions in port according to the invention;
**Fig. 5** is the filtering chamber seen in cross-section;
**Fig. 6** shows the cross-section view of a bag filter; and
**Fig. 7** the cross-section VII-VII indicated in Fig. 6.

Herein, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference which it is associated with. For example, said terms, if associated with a value, preferably indicate a divergence of not more than 10% of said value.

In addition, where used, terms such as "first", "second", "upper", "lower", "main" and "secondary" do not necessarily refer to an order, a priority relationship or relative position, but may simply be used to more clearly distinguish different components from each other.

With reference to said Drawings, the treatment plant of ship emissions in port according to the invention is globally denoted by reference numeral **1.**

It is suitable for use to abate the exhaust gases produced by a vessel **10,** reducing them and, preferably, practically annulling the environmental impact. In particular, the port plant 1 is suitable to abate and, therefore, reduce the concentration at least of the pollutants in the exhaust gases of a vessel 10.

The vessel 10 comprises at least a smokestack **11** where the exhaust gases generated by the vessel 10 converge and defining a discharge opening **11a** of exhaust gases from the smokestack 11.

The exhaust gases comprise substances combusted in a combustion process such as those produced by a propulsion engine and/or a fossil fuel-powered electricity generator as HFO (Heavy Fuel Oil) or IFO (Intermediate Fuel Oil) or MGO (Ship Gas Oil) or other fuels suitable for driving a motor or a diesel type generator and on-board boiler, where present.

The treatment plant of ship emissions in port 1 comprises, in brief, one or more collection hoods **2** of the exhaust gases each suitable to engage a smokestack 11 at the discharge opening 11 a so as to collect the exhaust gases coming out of said smokestack 11; at least one scrubber **3** of the exhaust gases collected by the collection hood 2 suitable to abate at least the pollutants present in the exhaust gases; and at least one movement group **4** suitable to place the collection hood 2 at the opening 11 a.

The hood 2 comprises a collection chamber **2a** of the exhaust gases; an inlet mouth **2b** of the gas in the chamber 21 a; and, appropriately, an exit opening **2c** of the exhaust gases from the collection chamber 2a.

The hood 2 and thus the chamber 2a are appropriately tapered along said longitudinal axis with their maximum cross-section coinciding with the inlet mouth 2b.

More appropriately, the hood and the chamber 2a are conical or arched.

The collection hood 2 comprises an engagement body **21** defining the inlet mouth 2b and a casing **22** defining the chamber 2a, appropriately airtight and the exit opening 2c.

The engagement body 21 is suitable to engage the smokestack 11 by tightening and, in particular, is of the type with a collar band. It thus comprises an open ring **211** having an angular extension greater than 360° so as to overlap its ends; and a control body **212** suitable to reciprocally move the ends of the ring 211 varying and, in particular, increasing or decreasing the amplitude of the mouth 2b. The ring 211 is substantially suitable to vary its diameter.

The control body 212 comprises a cogwheel hinged to the open ring 211, an engine, preferably a servo motor, suitable to turn the cogwheel in relation to the ring 211 and teeth or another similar solution made along at least a portion of ring 211 and which engages the cogwheel so as to command a relative movement between the ends of the open ring 211. The control body 212 thus comprises motorised restriction means of the diameter of the engagement body 21.

The casing 22 is suitable to vary the shape of the chamber 2a based on the breadth of the inlet mouth 2b and, thus, based on the control body 212.

It comprises a crown **221** distal from the ring 211 and defining the exit opening 2c; one or more battens **222** subtended between the ring 211 and crown 221; and a cover **223** defining the chamber 2a and, in particular, defining the outer surface of the casing 22.

The battens 222 are equally angularly spaced from each other.

They have a first end engaged to the open ring 211 and a second end engaged to the crown 221.

At least one of the ends and, in particular, the second end is hinged to the crown 221 so that the battens 222, during a change of amplitude of the mouth 2b, can rotate around an axis substantially perpendicular to the longitudinal axis of the hood 2 changing the shape of the chamber 2a. Optionally, the first end is hinged or integral with the ring 211.

Alternatively, the first end and the second end are respectively integral with the ring 211 and the crown 221 and the battens 222 follow a variation of amplitude of the inlet mouth 2b by elastic deformation.

The cover 223 is engaged to the crown 221 and the ring 211 using a waterproof constraint, for example by gluing, so that any gas coming out of the chamber 2a passes exclusively through the exit opening 2c.

It is impervious to the passage of gases and, specifically, is made of fabric or polymer membranes.

Joined to the exit opening 2c, the port plant 1 has a scrubber 3 suitable to eliminate the pollutant agents present in the exhaust gases.

In particular, the scrubber 3 is designed to intercept and thus retain particulate having appropriately a diameter substantially of at least 10 µm, specifically 1 µm and, more specifically, 0.1 µm.

It comprises at least one filtering member **31** suitable to retain the particulate and thus the pollutants; and vacuum means **32,** preferably downstream of the filter member 31, suitable to place at least the chamber 2a in a vacuum so to draw in the gases from the chamber 2a and command their passage through the filtering member 31.

The vacuum means 32 comprise a fan and an engine suitable to control the fan. The term filtering, as usual, is understood to mean any treatment of the pollutants, including their possible transformation into harmless substances.

More specifically the filtering member 31 consists of a filtering chamber **310** which the exhaust gases flow into. The filtering chamber 310 preferably comprises a collection basin **312** and at least a filtering section **313.**

In particular, the filtering section 313 is for example a duct inside which a plurality of bag filters **311** are placed and constrained.

Below the filtering section 313 is the collection basin 312 mentioned, used mainly to collect the pollutant residues removed from the exhaust gases.

It is therefore for example substantially a funnel-shaped duct, at the tapered end of which a rotary valve **314** is situated.

The rotary valve 314 is preferably a mechanical type valve suitable to remove the sooty pollutant substances deposited on the bottom of the collection basin 312.

In output from the filtering section 313 an outflow duct **315** is preferably located. Such outflow duct 315 allows both the output of the cleaned exhaust gases through the bag filters 311 placed in the filtering section 313, and the introduction of pressurised gas to clean said bag filters 311.

The bag filters 311 are in particular preferably made of a tubular structure **311 a.** The latter may consist for example of grains of refractory material such as silicon carbide or alumina grains press-formed for high density filters.

However the tubular structure preferably comprises a weave of vacuum heat-formed refractory fibres used as low density filters.

Such tubular structure 311 a comprises a closed end made of ceramic material, as mentioned, and further comprises a flange **311e** at the free end.

Inside the tubular structure 311 a an endoskeleton **311b** is also preferably positioned suitable to support the structure of the bag filter 311 for example, following the application of flexural loads.

It is known in fact that ceramic materials are characterised by a high fragility and consequently if subjected to stresses such as bending, can create micro cracks with destructive effects on the structures which they compose.

The endoskeleton 311 b is preferably made of a metal frame structure substantially in the shape of an open basket.

In addition, the endoskeleton 311 b defines a main axis **3a** aligned with the central axis of the tubular structure 311 a at a main plane **3b** perpendicular to the main axis 3a.

The endoskeleton 311b is thus for example composed of vertical uprights **311c,** extending preferably mainly parallel to the axis 3a, and circumferential structures, extending preferably mainly in a circumferential direction with respect to the axis 3a and mainly parallel to the main plane 3b.

The structures that make up the endoskeleton 311 b preferably have a minimum thickness along the cylindrical wall of the bag filter 311.

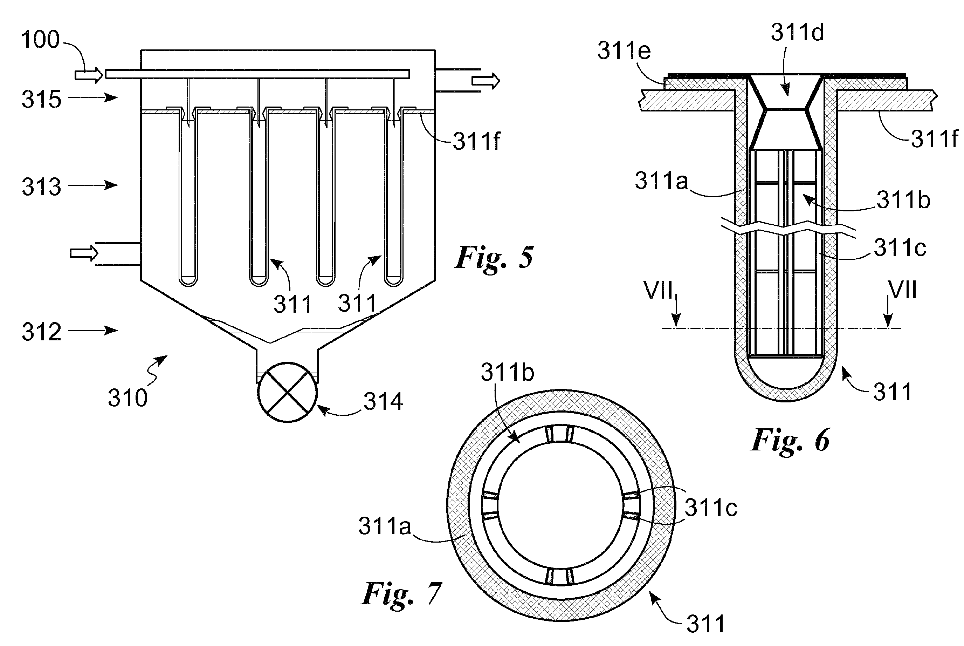

In addition, the vertical uprights 311c, in cross-section in the main plane 3b, are preferably composed of blades arranged radially in pairs side by side including a central slot and defining a duct diverging along said slot (Fig. 7).

Lastly, between the flange 311 e and the endoskeleton 311 b a venturi tube **311 d** is preferably placed, preferably of the convergent-divergent type.

The use of the latter element, for example, facilitates the flow of compressed air **100** coming from the outflow duct 315 for cleaning the bag filters 311.

The bag filters 311 described above are in particular preferably constrained at the flange 311e to a perforated, waterproof plate **311f** suitable to prevent the passage of the exhaust gases to the outside of the filtering surface characterising the bag filters 311.

As a result, the filtering section 313 preferably presents itself as a duct closed by a cover consisting of the perforated, waterproof plate 311f inclusive for example of a plurality of bag filters 311 constrained to it integrally with the holes.

Such perforated, waterproof plate 311f is preferably made of steel.

The filtering member 31 comprises at least one filtering section 313 comprising at least one out of the following: sulphur filters **31a** suitable to retain sulphur oxides; and nitrogen filters **31b** suitable to retain nitrogen oxides. Preferably, the member 31 comprises a sulphur filtering section 313a, comprising sulphur filters 31 a, and a nitrogen filtering section 313b comprising nitrogen filters 31 b, arranged in series so as to allow the gas to pass through both types of filters 31 a and 31 b.

The sulphur filters 31 a comprise one or more bag filters 311, preferably ceramic, suitable to be crossed internally by the exhaust gases. The sulphur filters 31a comprise one or more sorbent filters.

The nitrogen filters 31 b comprise one or more bag filters 311 preferably urea.

In particular the sulphur filters 31 a and the nitrogen filters 31 b differ in some specific features: both are preferably bag filters 311 and therefore substantially have a "dry" behaviour and functioning, i.e. without introducing liquid substances in the filtering member 31.

However the sulphur filters 31 a are preferably standard dry filters, while the nitrogen filters 31 b are preferably catalytic dry filters.

The catalytic dry filters are bag filters 311 the tubular structure 311 a of which is impregnated with nanometric SCR catalysts.

These catalysts make it possible to convert the nitrous oxide with a conversion efficiency of approximately 90% and do not present the typical deterioration characteristics of the traditional non-dry SCR.

In the catalytic dry filters urea or ammonia in the gaseous state may also be introduced.

The sulphur filters may for example be dry catalytic filters.

The scrubber 3 and movement group 4 are separated by the collection hood 2. In particular, the scrubber 3 and movement group 4 are placed on the ground or, more specifically, on a transport craft **1a** suitable to position itself in the vicinity of the vessel 10 on the free side opposite the mooring quay.

In this case, the scrubber 3 comprises a duct **33** suitable to place the chamber 2a in fluidic through connection with the vacuum means 32 and thus the filters 31. Preferably, the duct 33 is flexible so as to follow the movement of the hood 2 and thus allow its constraint to the smokestack 11.

Additionally, the scrubber 3 comprises an input manifold **34,** suitably placed upstream of the member 31 and, therefore, suitable to receive the exhaust gases from the duct 33 and to present them to the filtering member; and an evacuation system **35** outwards of the exhaust gases in output from the filtering member 31 or appropriately placed downstream of the vacuum means 32.

The movement group 4 is suitable to pick up the collection hood 2 from a loading station suitably placed on the ground or, more appropriately, on the aforesaid transport craft.

It can be identified in a crane and comprises a gripping body **41** suitable to engage to the hood 2; a lifting structure **42** suitable to control the movement of the gripping body 41 and, thus, the collection hood 2; and, in some cases, a rotating platform **43** suitable to support and rotate the structure 42 around a substantially vertical axis.

The lifting structure 42 can be identified in an articulated arm suitable to support the gripping body 41 and comprising a series of profiles loosely bound together so as to move reciprocally varying the extension of the lifting structure 42 and, thus, moving the gripping body 41.

In particular, the articulated arm comprises a first profile **421** supporting the gripping body 41; one or more second profiles **422** loosely bound and, in particular, hinged to adjacent second profiles 422 and / or to the first profile 421; and at least one mover suitable to command a relative rotation between adjacent profiles 421 and 422 and, thus, a variation of extension of the articulated arm.

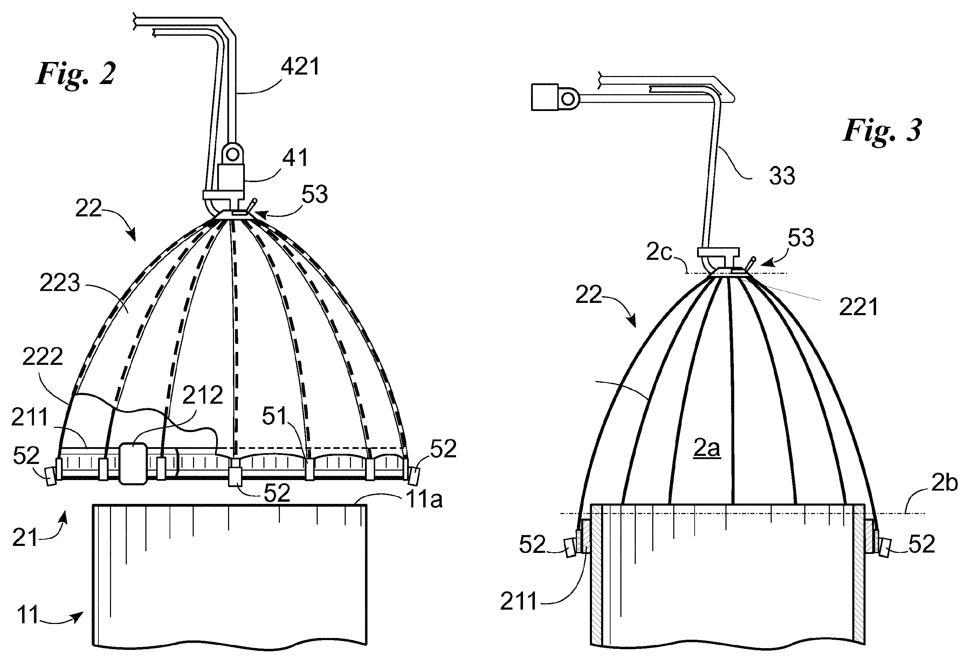

In particular, the mover is suitable to define, for the first arm 421, a working position (Fig. 3) in which it is suitably spaced apart from the adjacent second arm 422 so that the gripping body 41 is spaced apart from the adjacent second arm 422 and, thus, able to engage to the hood 2; and a rest position (Fig. 2) in which the first arm 421 is adjacent to the second arm 422 and therefore, the gripping body 41 is disengaged from the collection hood 2 and, suitably, drawn closer to the adjacent second arm 422.

In order to simplify handling, the duct 33 is constrained to at least the second profiles 422 and thus follows the articulated arm and the collection hood 2 during its movements.

In order to allow the correct positioning of the hood 2 on the smokestack 11, the port plant 1 comprises at least one guide device suitable to permit the correct positioning of the hood 2; and a control unit **6** suitable to command the movement of the movement group 4 and, consequently, of the collection hood 2 according to the guide device.

Optionally, the control unit 6 is suitable to control the control body 212.

The guide device is suitably constrained to the collection hood 2 and, in particular, to the engagement body 21.

The guide device comprises at least one of: proximity sensors **51** constrained to the open ring 211 and suitable to detect the presence of objects and, in particular, of the smokestack 11 in the immediate vicinity of the mouth 2b; at least one camera **52,** preferably four, suitable to film at least the smokestack 11; a global positioning system **53** (known as GPS) suitable to define the geographical coordinates of the hood 2; and, not illustrated in the figure, a power supply, for example a battery, supplying electricity to the guide device.

In detail, the guide device comprises, in addition to the power supply, proximity sensors 51; at least one camera 52; and a global positioning system 53.

The cameras 52 are suitable to film the mouth 2a and are suitably placed inside or outside the chamber 2a.

Appropriately, in data transfer with the guide device and the control body 212, for example via wireless connection means, the plant 1 presents the control unit 6 suitable to control the movements of the hood 2 as a function of the guide device and, optionally, the control body 212.

The control unit 6 comprises a screen **61** suitable to play at least the film recorded by the cameras 52 and, appropriately, proximity sensors 51; control members, such as a push-button panel and/or levers by means of which to control the movements of the movement group 4 and, thus the hood 2 and, possibly, the scrubber 3.

Advantageously centring marks are shown on the screen suitable to facilitate the centring of the collection hood on the discharge opening 11 a.

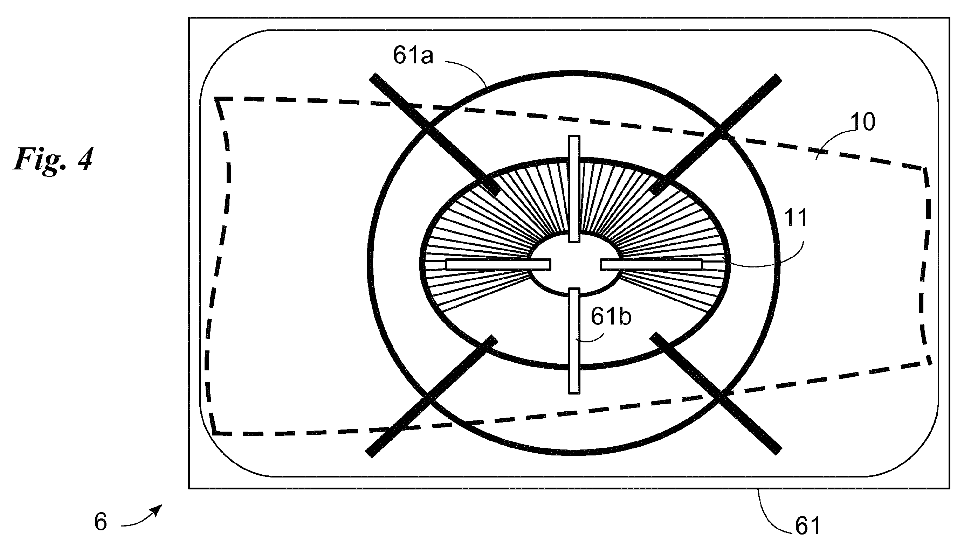

The centring marks, as shown in Fig. 4, may comprise at least one of: a reproduction **61a** of the inlet mouth 2a; a cross **61b** centred relative to the axis of the collection hood 2.

The functioning of a treatment plant of ship emissions in port, described above in a structural sense, is as follows.

The operator, on board the craft 1 a, arrives at the vessel 10 which, for example, is preparing to enter a port, harbour, or which has completed its mooring operations. Having arrived at the vessel 10, the operator, picks up the collection hood 2 from the craft 1a by means of the control unit 6, raises the hood 2 and the duct 33 bringing them to the smokestack 11, inserts the discharge opening 11 a in the hood 2, and then blocks said hood to the smokestack 11.

In particular, the operator brings the lifting structure 42 to the collection hood 2 by means of the control members, and then actuates the gripping body 41 to pick up the hood from the craft 1 a.

At this point, the operator commands a relative rotation of the arms 421 and 422 bringing the hood 2 to the smokestack 11.

Then, with the aid of the screen 61, the operator centres the axis of the hood 2 on the smokestack 11, makes the hood 2 descend onto the smokestack 11 superposing the engagement body 21 to the smokestack 11 and, lastly, orders the control body 212 to clamp the open ring 211 to the smokestack 11.

At this point, the operator orders the disengagement of the gripping body 41 from the collection hood 2 and actuates the scrubber 3.

In particular, the vacuum means 32 begin to draw air from the duct 33 placing said duct 33 and the chamber 2 in a vacuum.

This vacuum draws from the chamber 2a the exhaust gases which, crossing the duct 33, reach the filtering member 31, which abates the pollutants present in the exhaust gases.

In particular, the exhaust gases are introduced into the first filtering chamber 310, inclusive of the sulphur filtering section 313a, pass beyond the filtering of the sulphur filters 31 a and are introduced, via the outflow duct 315, inside a second filtering chamber 310, inclusive of the nitrogen filtering section 313b.

The gases already purified by the sulphur filters 31 a are then further purified by nitrogen filters 31 b inside the nitrogen filtering section 313b and come out via the outflow duct 315 of the chamber 310 which introduces the completely cleaned gases to the evacuation system 35.

If necessary moreover compressed air 100 may be impulsively introduced at the outflow ducts 315.

Said compressed air 100 acquires speed inside the venturi tube 311 d of the bag filters and makes it possible to detach the impurities deposited on the outer ceramic surfaces of the bag filters and in particular on the surface of the tubular structure 311 a.

The detached particles are thus driven to deposit on the collection basin 312 and are then removed from the filtration chamber 310 by means of the rotary valve 314 placed in operation.

The invention achieves important advantages.

In fact, a first important advantage lies in the fact that the as soon as the vessel 10 arrives in port, the exhaust gases are collected by the scrubber 3 avoiding the dispersion of pollutants into the environment.

Another advantage is given by the fact that the vessel 10 can keep its auxiliary engines and the possible boiler on, powering them with HFO or with IFO without having to use the expensive and hard to locate MGO to comply with the requirements of Regulation 2012/33/EU and other similar laws on the matter of marine pollution, for the whole time of permanence in the port, and consequently avoid the need for expensive and complex external power supply systems or, even if such systems were already in operation, enable vessels unable to receive the power supply from the docks, to comply with the existing laws on ship pollution, during their stay in port, without even having to resort to MGO fuel, the only one allowed for use in ports, having a low content of sulphur (S <0.1 %).

An important advantage is to be identified in the fact that the plant for the treatment of ship emissions in port is easy to use with any type of vessel 10.

This aspect is given by the engagement body 21 which by making it possible to vary the inlet mouth 2b, adapts the hood 2 to the smokestack 11.

Moreover, this ease of use is ensured by the presence of the guide device and, in addition, by the realisation of the centring marks 61 a on the screen 61. This makes it possible to perform the coupling without resorting to any external human intervention since the operator has everything he needs for the remote guidance of the coupling systems.

A further important advantage is given by the gripping body 41 which, disengaging itself from the hood 2, releases the lifting structure 42 from the collection hood 2 allowing the hood 2 and the lifting structure to move reciprocally and, consequently, the vessel 10 to follow the motion of the waves without the hood 2 damaging the smokestack 11.

More specifically another key advantage is provided by the bag filters 311 used.

They make it possible to eliminate a plurality of impurities such as particulate matter, nitrous oxide, dioxins, metals, hydrochloric acid, sulphur dioxide and so forth using a "dry" technology which guarantees high efficiency and permits a considerable reduction of the number, and thus the cost, of the catalytic additives used in the purification process of the exhaust gases.

Such catalysts are in fact incorporated inside the filter and do not suffer from the poisoning and deterioration typical of the conventional SCR technologies in the liquid state, better known as scrubbers, extensively used in the present state of the art.

In addition, the bag filters 311 are provided with a metal endoskeleton 311 b which helps to protect and support the ceramic body constituting the tubular structure 311a.

In conditions of fully-aroused sea and groundswell the filtering chamber 310 which houses the bags is subject to the stresses imposed by the movements of the sea such as pitch, roll and compound movements.

Furthermore, during berthing, the barge, even if properly equipped with fenders, is subject to impact and backlashes with the vessel and with the quay.

The bag filters 311, in these conditions, thus risk breaking precisely at the point of suspension corresponding to the coupling between the flange 311e and the waterproof, perforated plate 311 f.

It is therefore necessary to ensure that the unavoidable movements of the bags are contained within the tolerance limits of the material they are made of.

This is advantageously guaranteed by the metal endoskeleton 311 b comprised inside the bag filter 311.

Variations may be made to the invention without departing from the scope of the inventive concept described in the independent claims and in the relative technical equivalents. In said sphere all the details may be replaced with equivalent elements and the materials, shapes and dimensions may be as desired.

## Claims

1. Treatment plant of ship emissions in port (1) suitable to be associated with a vessel (10); said vessel (10) comprising
- at least one smokestack (11) defining a discharge opening (11 a) for exhaust gases from said smokestack (11); at least one collection hood (2) of said exhaust gases suitable to engage with said smokestack (11) at said discharge opening (11 a) so as to collect said exhaust gases in output from said smokestack (11);
- a scrubber (3) of said exhaust gases collected by said at least one collection hood (2) suitable to destroy at least the pollutants present in said exhaust gases; and
- a drive unit (4) suitable to move said collection hood (2) arranging it at said discharge opening (11 a),
- **characterised in that** said scrubber (3) comprises
- at least one filtering chamber (310) comprising at least one bag filter (311),
- said bag filter (311) being suitable to purify the exhaust gases from said smokestack (11) in dry operating and comprising a tubular structure (311 a) made of ceramic material.

2. Treatment plant of ship emissions in port (1) according to claim 1, wherein said collection hood (2) comprises an engagement body (21) defining an inlet mouth (2b) and suitable to engage with said smokestack (11); and a casing (22) defining the collection chamber (2a) of said exhaust gases.

3. Treatment plant of ship emissions in port (1) according to the preceding claim, wherein said engagement body (21) comprises an open ring (211) having an angular extension greater than 360° so as to superpose the ends thereof; and a control body (212) suitable to reciprocally move said ends of said open ring (211) by varying the amplitude of said inlet mouth (2b).

4. Treatment plant of ship emissions in port (1) according to one or more of the preceding claims, wherein said movement unit (4) comprises a gripping body (41) suitable to engage with said collection hood (2); a lifting structure (42) suitable to control the movement of said gripping body (42) and, thereby, of said collection hood (2).

5. Treatment plant of ship emissions in port (1) according to one or more of the preceding claims, comprising at least one guide device (51, 52, 53) suitable to allow the correct positioning of said collection hood (2); and a control unit (6) suitable to control the movements of said collection hood (2) according to said guide device (51, 52, 53).

6. Treatment plant of ship emissions in port (1) according to the preceding claim, wherein said guide device (51, 52, 53) comprises at least one of the following: proximity sensors (51) connected to said collection hood (2) and suitable to detect the presence of objects in the vicinity of said inlet mouth (2b); at least one camera (52) suitable to film at least said inlet mouth (2b) and placed inside the chamber (2a); and a global positioning system (53) suitable to define the geographical coordinates of said collection hood (2).

7. Treatment plant of ship emissions in port (1) according to the preceding claim, wherein said guide device (51, 52, 53) comprises said proximity sensors (51); said at least one camera (52) and said global positioning system (53).

8. Treatment plant of ship emissions in port (1) according to one or more of the claims 5-7, wherein said control unit (6) comprises a screen (61) suitable to play at least the film made by said at least one camera (52); control members suitable to command the displacements of said movement unit (4) and, thus, of said collection hood (2).

9. Treatment plant of ship emissions in port (1) according to one or more of the preceding claims, wherein said bag filter (311) comprises an endoskeleton (311 b) suitable to support said tubular structure (311 a).

10. Treatment plant of ship emissions in port (1) according to the preceding claim, wherein said endoskeleton (311 b) is composed of a metal lattice structure.

11. Treatment plant of ship emissions in port (1) according to the preceding claim, wherein said endoskeleton (311b) comprises vertical uprights (311c) composed of blades arranged radially in pairs side by side including a central slot.

12. Treatment plant of ship emissions in port (1) according to the preceding claim, wherein said blades define along said slot a divergent duct, from the inside to the outside of said bag filter (311).

13. Treatment plant of ship emissions in port (1) according to claim 10 or 11, wherein the structures which compose said endoskeleton (311 b) have a minimum thickness along the cylindrical wall of said bag filter (311).

14. Treatment plant of ship emissions in port (1) according to one or more of the preceding claims, wherein said filtering chamber (310) comprises a collection basin (312), a rotary valve (314), at least one filtering section (313) and at least one outflow channel (315).
